Europäisches Patentamt

European Patent Office

Office européen des brevets

(11) Publication number : **0 520 960 A1**

# (12) EUROPEAN PATENT APPLICATION

(21) Application number : **92830326.2**

(22) Date of filing : **23.06.92**

(51) Int. Cl.⁵ : **B60S 1/24**

(30) Priority : **26.06.91 IT TO910488**

(43) Date of publication of application :
**30.12.92 Bulletin 92/53**

(84) Designated Contracting States :
**DE ES FR GB SE**

(71) Applicant : **INDUSTRIE MAGNETI MARELLI S.p.A.**
**Via Adriano 81**
**I-20128 Milano (IT)**

(72) Inventor : **Defilippis, Pietro, c/o Ind Magneti Marelli S.p.A.**
**Via Adriano, 81**
**I-20128 Milano (IT)**
Inventor : **Ajello, Luigi**
**Via Venezia, 1**
**I-20060 Cassina de Pecchi (Milano) (IT)**
Inventor : **Larva, Luigi**
**Via Bonfadini, 94**
**I-20138 Milano (IT)**

(74) Representative : **Quinterno, Giuseppe et al**
**c/o Jacobacci-Casetta & Perani S.p.A. Via Alfieri, 17**
**I-10121 Torino (IT)**

(54) **A variable-travel windscreen wiper device.**

(57)   The device comprises an operating mechanism (1) capable of imparting to a shaft (20) an oscillatory movement between two extreme positions. The mechanism (1) comprises operating means adapted to vary the oscillatory travel of the shaft (20). The operating means include a rotatable cam (50) adapted to produce a displacement of the axis of oscillation (A) of a transmission element (30) in relation to the axis of rotation (B) of the shaft (20).

FIG. 1

EP 0 520 960 A1

The present invention relates to a windscreen wiper device for motor vehicles, of the type comprising:

- a shaft, adapted to rotate about its own longitudinal axis on which a blade-holder arm is intended to be fixed;
- a transmission mechanism adapted to impart to the shaft an oscillatory movement between two extreme position, the transmission mechanism including a pair of transmission elements which oscillate about respective axes, a first one of the said axes being fixed and coinciding with the axis of the aforesaid shaft, the position of the second axis in relation to the first determining the amplitude of oscillatory movement of the shaft and
- operating means adapted to vary the position of the second axis in relation to the first.

The above-defined device is known from Italian Patent Application No. 67858-A/90 of the same Applicants. The device illustrated in the said document describes a kinematic operating system for a windscreen wiper, which makes it possible to limit the amplitude of oscillatory travel of the blade-holder arm so that in conditions of critical visibility it is possible to obtain an increase in the oscillating frequency of the arm without having to increase its angular speed. The reduction in the oscillatory travel is achieved by means of displacement of the axis of oscillation of a transmission element of the mechanism in relation to the axis of the shaft carrying the blade-holder arm.

The present invention has as its object the provision of a windscreen wiper device of the above-specified type which is of simple and compact construction, comprising a reduced number of parts and which can be rapidly assembled.

According to the present invention, this object is achieved by providing a windscreen wiper device of the above-defined type, characterised in that the said operating means include a rotatable cam adapted to produce a movement of the above-mentioned second oscillatory axis along a direction which is substantially at right-angles to the axis of rotation of the shaft.

Further characteristic features and advantages of the present invention will become evident from the ensuing detailed description which refers to the accompanying drawings which are provided purely by way of non-limitative example and in which:

Fig.1 is an exploded perspective view of a device according to the present invention,

Fig. 1a is a perspective view similar to that in Fig. 1 illustrating an alternative embodiment of the device according to the invention,

Fig. 2 is a cross-section through the device in Fig. 1,

Figs. 3 and 4 are diagrammatic views illustrating the functioning of the device in Fig. 1,

Figs. 5 and 7 are linear views of the profile of the cam indicated by the arrow V in Fig. 1 and respectively 1a and

Figs. 6 and 8 are linear views of the profile of the cam indicated by the arrow VI in Fig. 2 in the configurations shown in Fig. 1 and in Fig. 1a respectively.

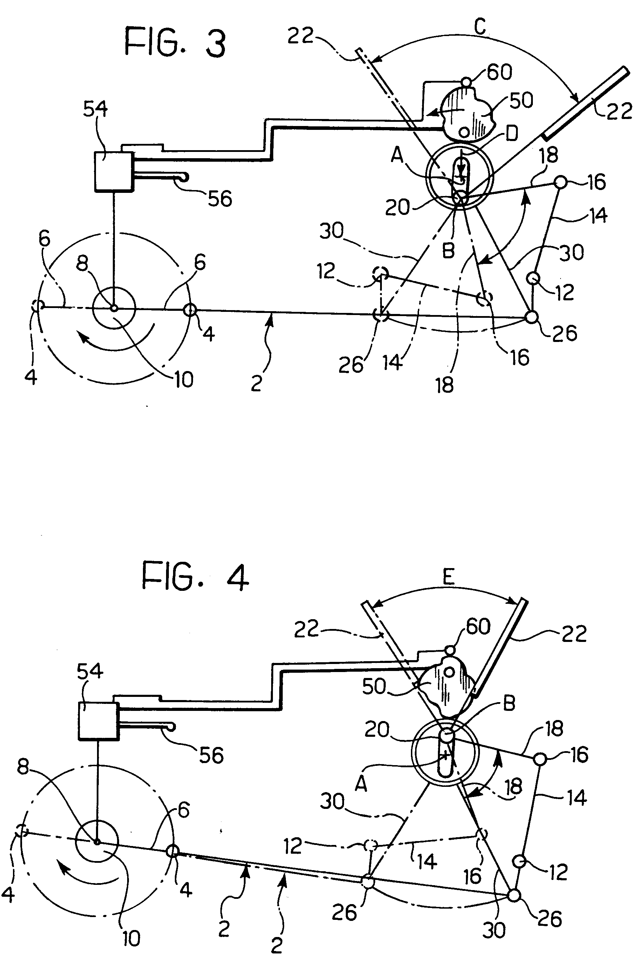

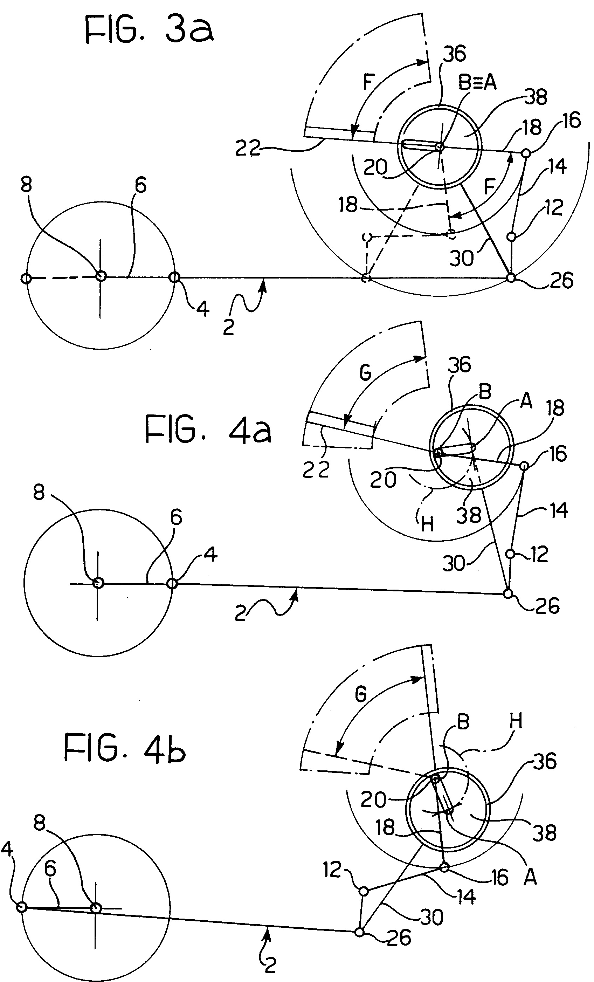

With reference to the drawings, reference numeral 1 denotes an operating mechanism for the windscreen wiper of a motor vehicle. The mechanism 1 comprises a connecting rod 2 of an L-shaped design, of which one end 4 is articulated on a crank 6 shown in Figs. 3 and 4. The crank 6 is caused to rotate about an axis 8 by an electric motor 10 (see Figs. 3 and 4).

The other end of the connecting rod 2 carries a pivot pin 12 which is articulated on a transmission link 14. The transmission link 14 is in turn articulated on a pivot pin 16 carried by a first transmission element 18 consisting of a rectangular plate. Fixed to the first transmission element 18 is a tubular shaft 20 on one end of which is fixed a blade-holder arm 22. The tubular shaft 20 is mounted to rotate within a casing 24 which is intended to be fixed to the structure of the vehicle.

The connecting rod 2 is furthermore provided with a second pivot pin 26 extending from the opposite part in respect of the first pivot pin 12, on which is articulated one end 28 of a second transmission element 30. The second end 32 of the second transmission element 30 has a bore 34 which is fitted in rotatable manner on a cylindrical wall 36 carried by a sliding member 38. The member 38 comprises a slot 40 surrounded by the cylindrical wall 36 and traversed by the fixed casing 24. The fixed casing 24 has two diametrally opposed facings 24a which are engaged with the lateral surfaces of the slot 40; the said facings 24a allow the sliding member 38 to travel in relation to the fixed casing 24, according to the axis of the slot 40. The sliding member 38 is furthermore provided with a peg 42 which extends through an arcuate slot 44 provided in the first transmission element 18.

Fixed to the first transmission element 18 is a casing 43 in which is disposed an electric motor 45 connected to an operating shaft 46 through a reduction arrangement with a helical gear wheel and an endless worm 48. The shaft 46 extends coaxially within the tubular shaft 20 and is free to rotate in respect of this latter. Fixed to the base of the operating shaft 46 is a cam 50 which cooperates with the peg 42 on the sliding member 38.

The arcuate slot 44 is of such an angular size that the first transmission element 18 is capable of negociating an angle equal to the maximum cleaning angle of the wiper arm 22, and a radial size such that the peg 42 has a radial travel corresponding to the total increment of the cam 50 cooperating with the peg 42.

The free end of the operating shaft 46 extends within the base of the blade-holder arm 22 and carries a second cam 51 the angular position of which imposes an initial loading on a spring 53 which maintains the blade pressed against the windscreen. The device for regulating the load acting on the blade-holder arm 22 is described in detail in a corresponding patent application of the Applicant. For the purposes of the present description, it is sufficient to note that the variation in angular position of the second cam 51 which gives rise to a variation in the loading on the blade-holder arm 22 is controlled by the same actuator 45 which determines the position of the first cam 50.

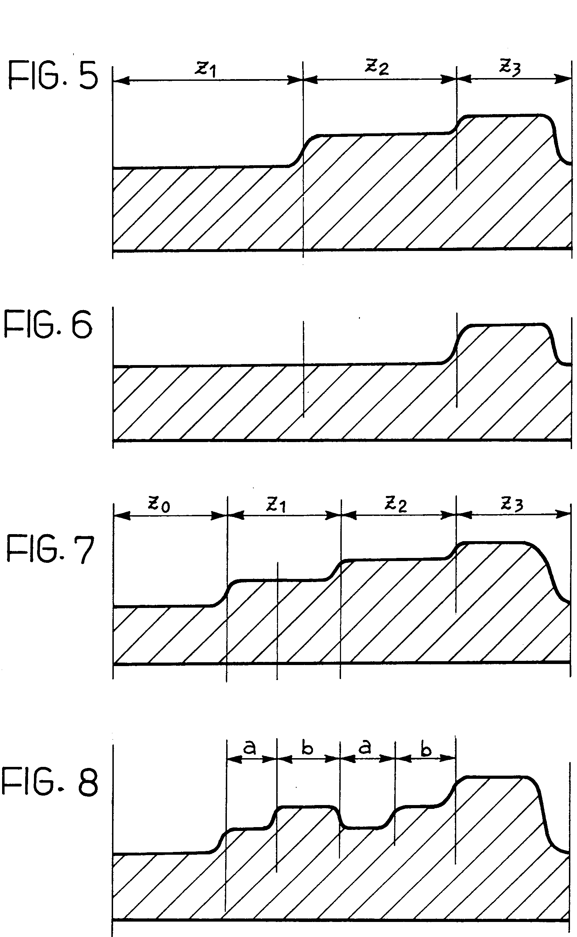

Fig. 5 diagrammatically shows the profile of the first cam 50 in a linear form. Along the profile of the cam 50 it is possible to pick out three working zones indicated as Z1, Z2, and Z3. In each zone, the radius of the cam 50 remains constant apart from a short connecting portion to the adjacent zones. To each working zone of the cam 50 corresponds a different position of the axis A in respect of the axis of rotation B of the shaft 46.

The profile of the second cam 51 shown diagrammatically in Fig. 6 is correlated to that of the first cam 50.

The manner in which the device according to the invention functions will be described hereinafter with reference to Figs. 3 and 4.

Figs. 3 and 4 show in continuous lines and in broken lines respectively the two summarised configurations of the operating mechanism 1 in the extreme positions of the blade-holder arm 22. The second transmission element 30 oscillates about the axis A which is constituted by the axis of the cylindrical wall 36 of the sliding member 38. The position of the axis of oscillation A of the second transmission element 30 in relation to the axis of oscillation B of the tubular shaft 20 determines the amplitude of the oscillatory travel of the shaft 20 and therefore of the blade-holder arm 22. In the embodiment shown in Fig. 3, the cam is in a position in which the zone Z1 is active (normal operating conditions) and the oscillatory travel of the blade-holder arm 22 assumes a value C.

The motor 45 which controls the rotation of the shaft 46 and of the cam 50 is connected to the conventional type of control unit 54 which is connected to an operating lever 56 disposed in the compartment of the motor vehicle. By operating the lever 56, the driver is able also to alter the speed of the blade-holder arm 22 by varying the rotary speed of the motor 10.

In conditions of critical visibility, the driver is able, by means of the lever 56, to select an operating condition in which the oscillatory travel of the blade-holder arm 22 is reduced. In this way, the oscillating frequency of the blade-holder arm 22 is increase without any further increase in the angular speed of the blade-holder arm 22.

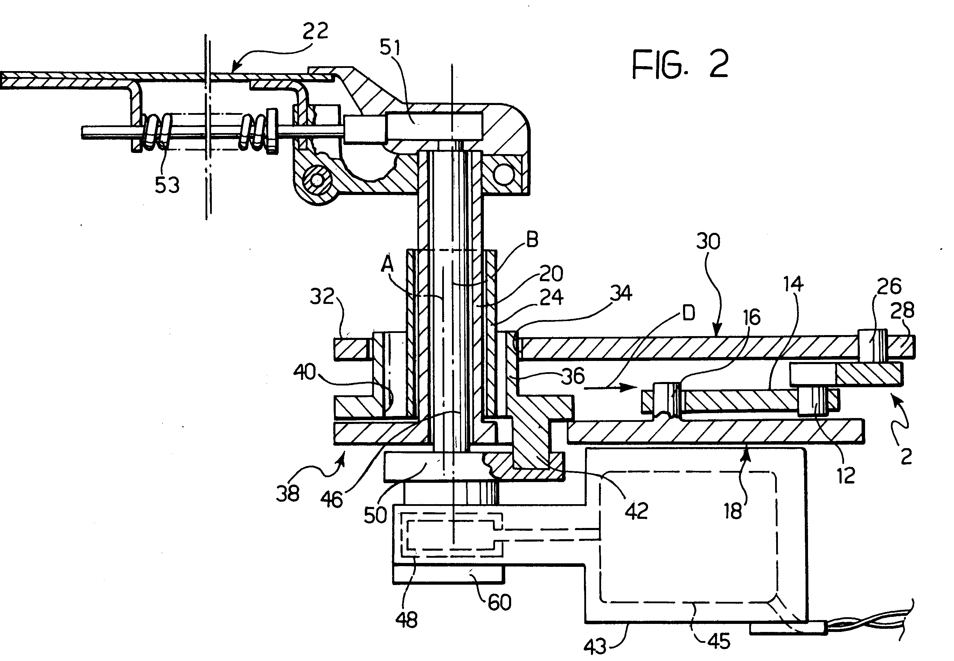

The reduction in the oscillatory travel of the arm 22 is obtained by controlling a rotation of the shaft 46 by means of the actuator 45 to the extent that the cam 50 is brought into the configuration in which the working zone Z3 is active. Therefore, the cam 50 produces a sliding of the member 38 in the direction indicated by the arrow D in Fig. 2, which comprises a displacement of the axis A in respect of the axis of the shaft B.

In the embodiment illustrated in Fig. 4, the new position of the oscillatory axis A in relation to the axis B of the shaft 20 determines an oscillatory travel of the blade-holder arm 22 of an amplitude E which is less than the preceding oscillatory travel C.

A position sensor 60 connected to the control unit 54 makes it possible to detect the position of the cam 50 in order to interrupt rotation of the motor 44 when the cam 50 reaches the desired position.

During use in snowfall conditions, the windscreen wiper blade tends to compact a mass of snow at the base of the windscreen. When this mass reaches a substantial bulk, the blade-holder arm has difficulty reaching the position of reversal of movement close to the bottom of the windscreen and is subjected to a flexion stress. To avoid this happening, the driver may select a configuration of operation in which the zone Z2 of the cam 50 becomes active. The relative position of the axes A and B is such that the above-mentioned position of reversal of movement of the blade-holder arm 22 is shifted upwardly in relation to the normal operating conditions. In this way, it is possible to avoid stressing the blade-holder arm under conditions where snow is accumulating.

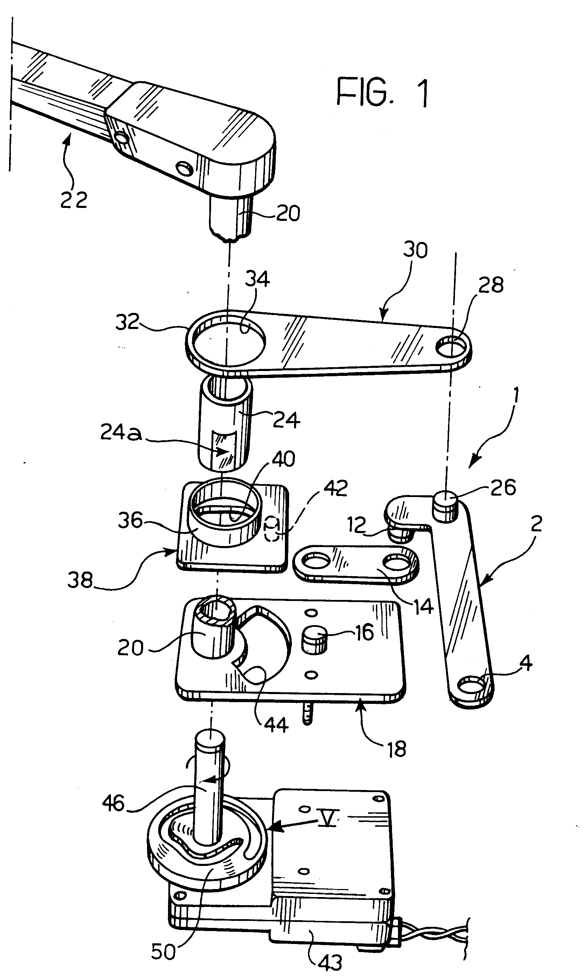

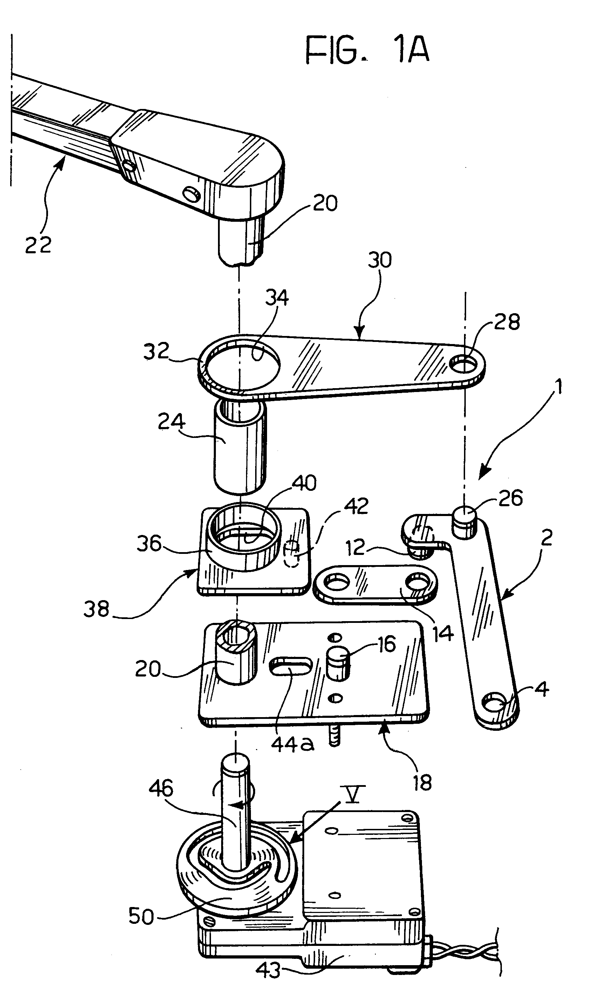

Fig. 1a shows an alternative embodiment of the present invention. The differences in comparison with the solution shown in Fig. 1 are:

the fixed casing 24 has a cylindrical outer surface and traverses the slot 40 in the sliding member 38 of which the peg 42 extends through a slot 44a provided in the first transmission element 18;

the slot 44a has a linear development such as to allow the peg 42 to travel by an amount corresponding to the total radial increment of the cam 50; (therefore, the sliding member 38 is able to travel and rotate in relation to the fixed casing 24; it moves in phases of selection of the angle of cleaning by the action of the cam 50; it rotates rigid with the first movable element 18 in the cleaning phase);

the cam 50, being no longer linked with the amplitude of the working zones engaged by the peg 42 for the amplitude of the maximum angle of cleaning, may have a greater number of working zones than in the embodiment shown in Fig. 1; the result is an increase in possible alternatives in the angle of cleaning available to the driver of the motor vehicle.

As an example, the device shown in Fig. 1a makes it possible, with a cam 50 of which the increments are qualitatively represented in Fig. 7, in addition to the configurations described previously, in the disconnected condition, to dispose the blade-holder arm in a position of rest close to the bottom of the windscreen, in which the arm extends below the position of reversal of movement of the embodiment during normal operation. In order to fulfil this function, the windscreen wiper devices of known type are provided with an auxiliary kinetic mechanism which causes the arm to perform an extra angular travel when the device is disconnected.

In the case of the present device, the deactivation operation is preceded by an actuation of the electric motor 45 which carries the cam 50 to a position in which the zone Z0 in Fig. 7 is active. In this configuration, the position of reversal of movement of the blade-holder arm is closer to the base of the windscreen than it was during conditions of normal operation. After having imposed this position of the cam 50 on the operating unit 54, the limit switch device proceeds to arrest movement of the arm when it has reached its position of rest.

Furthermore, in the device in Fig. 1a, the profile of the second cam 51 correlated with the first cam 50 may display different increments and therefore vary the loading of the spring 53 according to each one of the working zones of the cam 50; by way of example, Fig. 8 diagrammatically shows a profile where the minimum pressure of the blades on the windscreen, in relation to the working zones of the cam 50, occurs in the zone Z0; in the zones Z1 and Z2 there are two intermediate pressures while the maximum pressure is to be found in the zone Z3. The pressure of the blades, a function of the position of the profile of the cam 51, correlated with that of the cam 50, may be varied according to the speed of the vehicle; in this case, a tachimetric signal processed by the operating unit 54 together with the signal from the position sensor 60, ensures that the cam 50 is arrested in the working zones a or b of Z1 or Z2 (zones indicated in Figs. 7 and 8); the said zones a or b are automatically selected according to the speed of the vehicle and the oscillatory travel of the blade-holder arm selected by the driver.

Fig. 3a diagrammatically shows the positions of reversal of movement assumed by the windscreen wiper arm, in the case of a device according to the embodiment shown in Fig. 1a; the hypothesis is adopted that,when the cam 50 is working in the zone Z0 in Fig. 7, the axis B of the tubular shaft 20 and the axis of oscillation A of the second transmission element 30 coincide; the blade traverses a cleaning angle equal to F.

Figs. 4a and 4b respectively and diagrammatically show the two positions of reversal of movement assumed by the windscreen wiper arm 22 in a device according to the embodiment shown in Fig. 1a when the cam 50 is working in the zone Z3 in Fig. 7; in this case, the axis A during the alternating movement passes through a portion of the circumference H having its centre on the axis B, its radius equal to the relative increment between the zones Z0 and Z3 of the cam 50 in Fig. 7 and its amplitude equal to the angle of cleaning G which in this specific case is less than F.

Another alternative to the kinetic system: in the event of particularly high maximum cleaning angles not being required (less than about 115°), the connecting rod 2 may be of substantially rectilinear form and the pivot pins 26 and 12 may be coaxial.

## Claims

1. A windscreen wiper device for motor vehicles, comprising:
   - a shaft (20) adapted to rotate about its own longitudinal axis (B) and on which a blade-holder arm (22) is intended to be fixed;
   - a transmission mechanism (1) adapted to impart to the shaft(20) an oscillatory movement between two extreme positions, the transmission mechanism (1) including a pair of transmission elements (18, 30) which oscillate about respective axes (A, B), a first one of the said axes (B) being fixed and coinciding with the axis of the aforesaid shaft (20), the position of the second axis (A) in relation to the first (B) determining the amplitude of oscillatory movement of the shaft (20) and
   - operating means adapted to vary the position of the second axis (A) in relation to the first (B), characterised in that the said operating means include a rotatable cam (50) adapted to produce a movement of the abovementioned second oscillatory axis (A) along a direction (D) which is substantially at right-angles to the axis of rotation (B) of the shaft (20).

2. A device according to Claim 1, characterised in that it comprises a connecting rod (2) connected to the first transmission element (18) by a transmission member (14), the second transmission element (30) comprising a first end (28) articulated on the said connecting rod (2) and a second end (32) which is mounted to rotate on a sliding member (38) adapted to be displaced between at least one first and one second operative position.

3. A device according to Claim 2, characterised in that the sliding member (38) comprises a circular wall (36) which surrounds the shaft (20) carrying the blade-holder arm (22), the axis (A) of the said wall being capable of assuming an eccentric position in respect of the axis (B) of the shaft (20), the second end (32) of the above-mentioned second transmission element (30) being mounted to rotate on the said circular wall (36).

4. A device according to Claim 2, characterised in that the first transmission element (18) comprises a slot (44, 44a) through which extends a peg (42) carried by the above-mentioned sliding member (38), the said peg (42) cooperating with the profile of the above-mentioned cam (50) to cause displacement of the sliding member (38) as the result of a rotation of the cam (50).

5. A device according to claim 1, characterized in that the aforesaid cam (50) is carried by an operating shaft (46) which extends within the shaft (20) carrying the blade-holder arm (22) and coaxially with the said shaft (20).

6. A device according to Claim 5, characterised in that the above-mentioned operating shaft (46) is actuated by an actuator (45) housed in a casing (43) fixed to the first transmission element (18).

7. A device according to Claim 1, characterised in that the above-mentioned cam (50) has an active profile in which it is possible to pick out at least two working zones corresponding to respective conditions of operation of the device with various amplitudes of the oscillatory travel of the blade-holder arm.

8. A device according to Claim 6, characterised in that the above-mentioned operating shaft (46) actuates a second cam (51) with a profile correlated to that of the cam (50), the second cam (51) being adapted to produce a variation in the contact pressure of the blade on the windscreen.

9. A device according to Claim 8, characterised in that the said actuator (45) controls both the variation in the angle of cleaning and the variation in the contact pressure of the blade on the windscreen.

10. A device according to Claim 9, characterised in that the variation in contact pressure of the blade is a function of the speed of the vehicle and the amplitude of the selected oscillatory travel of the blade.

# FIG. 1

# FIG. 1A

FIG. 2

## FIG. 3

## FIG. 4

FIG. 3a

FIG. 4a

FIG. 4b

FIG. 5

FIG. 6

FIG. 7

FIG. 8

**European Patent Office**

## EUROPEAN SEARCH REPORT

Application Number

EP    92 83 0326

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-3 908 293 (ASMO CO., LTD.) <br> * column 13, line 27 - column 14, line 49; figures 16-18 * | 1-3 | B60S1/24 |
| A | DE-A-3 829 939 (ASMO CO., LTD.) <br><br> * page 3, line 28 - page 4, line 7 * <br> * page 4, line 47 - page 5, line 17 * <br> * figures 1,2 * | 1,5,6, 8-10 | |
| A | DE-A-3 839 862 (AISIN SEIKI K.K.) <br> * column 1, line 57 - column 2, line 7 * <br> * page 2, line 29 - line 60 * <br> * figures 1-4 * | 1,2,6 | |
| A | EP-A-0 369 428 (AISIN SEIKI KABUSHIKI KAISHA) <br> * page 3, column 4, line 25 - page 4, column 5, line 37; figures 1,4,5 * <br> * page 4, column 6, line 51 - line 58; figures 16,17 * | 1-3 | |
| A | FR-A-2 295 856 (FABRICCA ITALIANA MAGNETI MARELLI) <br> * page 2, line 30 - page 3, line 17; figures 1-4 * | 1-3 | TECHNICAL FIELDS SEARCHED (Int. Cl.5 ) <br><br> B60S |
| P,D, A | EP-A-0 484 292 (INDUSTRIE MANETI MARELLI S.P.A) <br> * page 3, column 3, line 11 - line 52; figures 3-6 * | 1,2,5,6 | |

The present search report has been drawn up for all claims

| Place of search | Date of completion of the search | Examiner |
|---|---|---|
| THE HAGUE | 02 OCTOBER 1992 | KULOZIK E. |